## Europäisches Patentamt
## European Patent Office
## Office européen des brevets

(11) Publication number: **0 141 582**
**B1**

## EUROPEAN PATENT SPECIFICATION

(45) Date of publication of patent specification: **07.09.88**

(51) Int. Cl.⁴: **G 01 J 5/34**

(21) Application number: **84307153.1**

(22) Date of filing: **18.10.84**

(54) Improvements in pyroelectric detectors.

(30) Priority: **20.10.83 GB 8328127**

(43) Date of publication of application:
**15.05.85 Bulletin 85/20**

(45) Publication of the grant of the patent:
**07.09.88 Bulletin 88/36**

(84) Designated Contracting States:
**DE FR IT SE**

(56) References cited:
**DE-A-2 000 388**
**DE-A-2 917 894**
**DE-A-2 921 298**
**DE-B-2 213 060**
**US-A-4 367 408**

(73) Proprietor: **PLESSEY OVERSEAS LIMITED**
**Vicarage Lane**
**Ilford Essex IGI 4AQ (GB)**

(72) Inventor: **Robinson, Martin Keith**
**13 Courteenhall Road**
**Blisworth Northants (GB)**
Inventor: **Loveluck, John Edward**
**28 Spinney Close**
**Towcester Northants (GB)**
Inventor: **Shorrocks, Nicholas Martyn**
**111 Spinney Hill Road**
**Northampton Northants (GB)**

(74) Representative: **Field, Howard John**
**The Plessey Company plc Beeston**
**Nottingham, NG9 1LA (GB)**

Courier Press, Leamington Spa, England.

## Description

The present invention concerns improvements in or relating to pyroelectric devices and more particularly, but not exclusively, to infra-red detector arrays.

All pyroelectric materials are also piezoelectric and will therefore generate an output voltage when subject to longitudinal stresses or strains both along and perpendicular to a pyroelectrically active axis, defined as the Z-axis. Any accelerations causing stress or strain will generate a response that can interfere with the desired pyroelectric signal.

For a number of applications of pyroelectric arrays, vibration within the operating environment may be substantial, thus any way of reducing stress or strain in the pyroelectric device due to the acceleration associated with this vibration will be beneficial.

Acceleration along the Z-axis of the pyroelectric device results in stress along that axis as the pyroelectric material deforms under its own mass and may also produce strains perpendicular to the Z axis.

In known practical device formats the mounting may be considered as a membrane or strut fixed at a number of points with pyroelectric material fixed to one face. Under acceleration this mounting bends under its own mass straining the pyroelectric device, thus producing an output signal. An example of prior art is DE—A—2921298.

It is an object of the present invention to minimise these effects. Thus a mounting arrangement that minimises straining of the pyroelectric device will result in minimum piezoelectric output. This can be best achieved by mounting the pyroelectric itself directly or as rigidly as possible to a support that is inherently stiff reducing these strains.

The present invention therefore provides an infra-red detector comprising a packaged pyroelectric device mounted on a block of like cross-section and of material which is of specific stiffness greater than that of the pyroelectric device.

In a preferred embodiment the pyroelectric device is mounted on a substrate, the substrate being mounted on a package header and the package header being mounted on the block of material comprising said rigid structure.

The reduction of strain can be achieved in practice by the use of a stiff support block, this achieves strain reduction in the pyroelectric device by two different effects:

(1) The strain can relax through the thickness of the block so the strain on the face on which the pyroelectric device is mounted is less than the strain in the overall support it is bonded to; and,

(2) The block stiffens the support, locally reducing lateral strains in this overall support. The block ideally is a cylinder or cuboid, depending upon the type of device package.

The amount of strain relaxation depends on the ratio between block thickness and half width or radius. An aspect ratio of approximately unity can give good relaxation and the optimum depends on the individual application.

The material providing optimum performance depends on the following:—

The stiffening effect of the block is significant in cases where its thickness is not appreciably less than the thickness of the structure it is mounted on. If the structure is bending, the block increases local rigidity, thus decreasing strain generated. Similarly if it is being stretched laterally, the increased stiffness reduces the strain in the area of the block by increasing it elsewhere.

The block however adds to the overall mass of the structure increasing its tendency to bend.

Thus a block material of high specific stiffness—ie. a material of high elastic Young's Modulus (to give good stiffness) and low density (to reduce mass) is required. High values of specific stiffness are exhibited by ceramics such as alumina, silicon nitride, and silicon carbide.

The bonds between the pyroelectric device and support block and between the block and the substrate it is mounted on need to be uniform and stiff. If, for example, the block were mounted just at the centre, though it would be well isolated from the strains on the substrate, it would bend about this point, producing a strain in the pyroelectric device that could be larger than the strain in the substrate.

Any voids or non-uniformities would have a smaller effect through a similar mechanism. Such irregularities are not significant if they are on a scale that is small compared with the distance from bond to pyroelectric device.

Compared with an alternative technique of strain reduction by the inclusion of a compliant layer between device and substrate, the stiff block has a number of advantages. The movement of the device relative to its support is very small, thereby minimising the risk of defocusing an imaged device. Its high stiffness means that any mechanical resonances are of relatively high frequency and so are less likely to disturb the operation of a comparatively low frequency pyroelectric device, than the low-frequency resonances associated with a compliant layer. The pyroelectric, possibly with connecting leads attached can represent a non-uniform load to the structure it is attached to. If this structure includes a compliant layer this can cause bending and strain of the pyroelectric device, as this layer cannot provide adequate support. This effect is minimised by the use of a stiff support.

Further reduction in the piezoelectric response can be obtained using an electrical compensation scheme. Here a masked or non-absorbing compensation element, mounted adjacent to an active element and upon the same block, is connected in series with the active element such that the piezoelectric voltages generated cancel. For this to work well the strains in the two adjacent elements need to be identical or very

2

similar. The common support block isolates each pyroelectric element from any irregularities in the mounting structure that might cause position dependent strains and attendant unbalanced voltages giving poor compensation.

In the drawings accompanying this specification:—

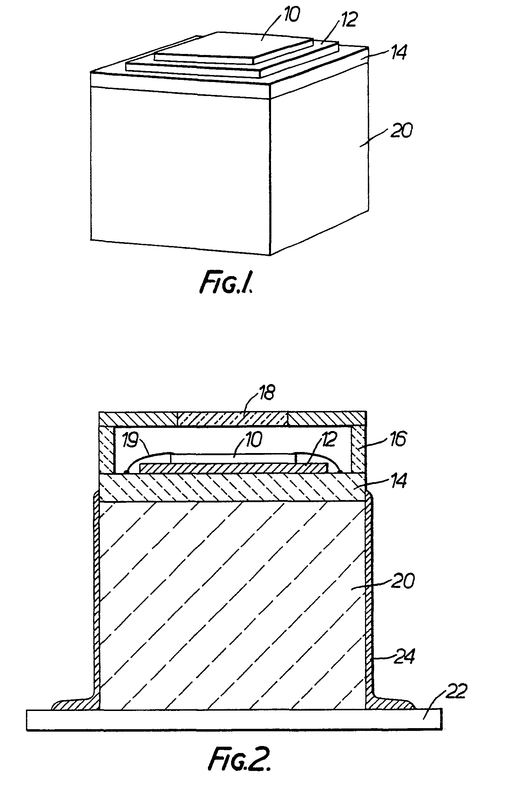

Figure 1 and 2 show in perspective view and in cross-section, respectively, infra-red detector constructed in accordance with this invention.

Detail of package structure is omitted in the perspective view, for clarity of presentation.

Embodiments of this invention will now be described with reference to these drawings.

In the infra-red detector shown, a pyro-electric ceramic device 10 is mounted on a substrate 12 and in turn mounted on an alumina package base 14. As shown in Figure 2, the package includes a cover portion 16 and an infra-red transparent window 18, the latter aligned with the device 10. Fly-leads 19 provide connection between the device and contact pads arranged on the base 14 about the periphery of the substrate 12. The whole is mounted on a stiffening ceramic block 20, the cross-section of which is matched in dimensions and shape to the base 14. It should be noted that the pyroelectric device 10 is bonded within this cross-section with no part over-hanging. In the embodiments shown the structure is of rectangular geometry. The block 20 is provided in the form of a cube. The structure described is clamped or bonded onto a printed circuit board 22 and together with board connectors, is bolted onto a common mounting. Conductors 24 are provided adjacent to the side wall of the block 20 and connect the contact pads to points on the printed circuit board 22.

Typical constructional details are summarised in the following table:—

TABLE I

Pyro-electric device (10):—

Either a matrix array of 16×16 elements, array size 5 mm square and 30 m thick, or a linear array of 40 elements, array size 2 mm×5 mm and 30 μm thick, of hot pressed, electrically conducting ceramics material based on the lead-zirconate iron-niobate-titanate system, with electrodes of platinum blacked gold;

substrate (12):—

10 mm square, $\frac{1}{4}$ to $\frac{1}{2}$ mm thick,

package base (14):—

25 mm square, 2 to 4 mm thick, alumina ceramic;

block (20):—

25 mm on each side, cube, alumina ceramic;

printed circuit board (22):—

50 mm square;

bonding agent (provided at each mounting interface):—

Epoxy resin, low viscosity—eg. proprietary resin Araldite (Registered Trade Mark) AV 100/HV100.

To ensure uniformity of bonding, a low viscosity resin has been chosen. In the example given, the resin and hardener components are mixed and heated to reduce resin viscosity. The components are coated with resin, assembled and the resin allowed to set in a high pressure ambient, to reduce introduction of sizeable air voids. In addition, the mating surfaces of the ceramic components are accurately machined so that bonding layers of uniform thickness can be produced (20 μm tolerance in thickness of 100—150 μm).

Details of suitable high specific stiffness ceramic are given in the table following:—

TABLE II

|  | Alumina (machine grade) | Silicon carbide — | Silicon nitride (hot pressed) | Silicon nitride (reaction bonded) |
|---|---|---|---|---|
| Young's Modulus ($\times 10^{11}$ Nm$^{-2}$) | 3.8 | 4.0 | 3.2 | 2.2—1.0 |
| Density ($\times 10^3$ Kg/m$^3$) | 3.8 | 3.1 | 3.2 | 2.7—2.1 |
| Specific Stiffness ($\times 10^8$ m$^2$s$^{-2}$ | 1.0 | 1.29 | 1.0 | 0.82—(0.48) |

**0 141 582**

The specific stiffness value of $1.29 \times 10^8$ m²s⁻² found for silicon carbide, is, it is believed, the highest specific stiffness value to date for ceramics.

It should be noted that the shape of block is not limited to that of a cube or cuboid. The precise shape will depend on the type of package used.

## Claims

1. An infra-red detector comprising a pyroelectric device (10) mounted within a package (14, 16) and characterised in that the package (14, 16) is mounted on a block (20) of like cross-section and of material which is of specific stiffness greater than that of the pyroelectric device (10).

2. A detector, as claimed in claim 1, wherein the block of material (20) is in the form of a cylinder, the ratio of thickness to radius thereof being at least one.

3. A detector, as claimed in claim 1, wherein the block of material (20) is in the form of a cuboid, the ratio of thickness to half-width thereof being at least one.

4. A detector, as claimed in one of the preceding claims wherein the material of the block (20) is a ceramic of high specific stiffness.

5. A detector, as claimed in claim 4, wherein said ceramic (20) is alumina.

6. A detector, as claimed in claim 4, wherein said ceramic (20) is silicon carbide.

7. A detector as claimed in claim 4, wherein said ceramic (20) is silicon nitride.

8. A detector, as claimed in any one of the preceding claims, wherein the pyroelectric device (10) comprises a plurality of active elements arranged in an array, together with at least one electrical compensation element.

## Patentansprüche

1. Infraroter Detektor bestehend aus einem pyroelektrischen Bauteil (10) innerhalb eines Gehäuses (14, 16) befestigt und dadurch gekennzeichnet dass das Gehäuse (14, 16) an einem Block (20) gleichen Querschnittes und Werkstoffes befestigt ist, welcher höhere spezifische Steifheit als die des pyroelektrischen Bauteils (10) besitzt.

2. Ein Detektor nach Anspruch 1 worin der Werkstoffblock (20) zylindrische Form hat, deren Verhältnis von Länge zum Radius mindestens eins beträgt.

3. Ein Detektor nach Anspruch 1, worin der Werkstoffblock (20) in der Form eines Würfels ist, dessen Verhältnis von Länge zur Halbbreite mindestens eins beträgt.

4. Ein Detektor nach irgend einem von Ansprüchen 1—3 wobei der Werkstoff des Blocks (20) ein keramisches Material hoher spezifischer Steifheit ist.

5. Ein Detektor nach Anspruch 4, wobei der genannte keramische Werkstoff Alumina ist.

6. Ein Detektor nach Anspruch 4 wobei der genannte Werkstoff (20) Silziumkarbid ist.

7. Ein Detektor nach Anspruch 4, wobei der genannte Werkstoff Siliziumnitrid ist.

8. Ein Detektor nach irgend einem der vorhergehenden Ansprüche, wobei der pyroelektrische Bauteil (10) aus einer Mehrzahl in Reihe angeordneter aktiven Elemente, zusammen mit mindestens einem elektrischen Kompensierelement, besteht.

## Revendications

1. Détecteur infrarouge comprenant un dispositif pyroélectrique (10) monté dans un boîtier (14, 16) et caractérisé en ce que le boîtier (14, 16) est monté sur un bloc (20) de section analogue et d'un matériau qui a une rigidité spécifique supérieure à celle du dispositif pyroélectrique (10).

2. Détecteur selon la revendication 1, dans lequel le bloc du matériau (20) est sous forme d'un cylindre, le rapport de épaisseur au rayon étant au moins égal à un.

3. Détecteur selon la revendication 1, dans lequel le bloc du matériau (20) est sous forme d'un parallélépipède rectangle, le rapport de l'épaisseur à la demilargeur étant au moins égal à un.

4. Détecteur selon l'une quelconque des revendications précédentes, dans lequel le matériau du bloc (20) est une céramique de rigidité spécifique élevée.

5. Détecteur selon la revendication 4, dans lequel la céramique (20) est l'alumine.

6. Détecteur selon la revendication 4, dans lequel la céramique (20) est du carbure de silicium.

7. Détecteur selon la revendication 4, dans lequel la céramique (20) est le nitrure de silicium.

8. Détecteur selon l'une quelconque des revendications précédentes, dans lequel le dispositif pyroélectrique (10) comporte plusieurs éléments actifs disposés suivant un arrangement, avec au moins un élément de compensation électrique.

Fig.1.

Fig.2.

1